# EUROPEAN PATENT SPECIFICATION

(11) **EP 1 739 337 B1**
(45) Date of publication and mention of the grant of the patent: **27.08.2008**
(21) Application number: 06251582.0
(22) Date of filing: 23.03.2006
(51) Int. Cl.: F16M 5/00

(54) **Support stands for power plants**
Tragständer für Generatoren
Supports pour générateurs

(30) Priority: 04.04.2005 GB 0506803
(43) Date of publication of application: 03.01.2007
(73) Proprietor: Cummins Power Generation Limited, Ramsgate, Kent CT12 5BF (GB)
(72) Inventor: Juden, Stephen, Ramsgate, Kent CT11 0LQ (GB); Whiting, Dawn, Ramsgate, Kent CT11 7QA (GB)
(74) Representative: Hector, Annabel Mary

(56) References cited:
- FR-A- 1 574 912
- JP-A- 10 196 392
- JP-A- 2005 030 552
- US-A- 3 815 965
- US-A1- 2002 069 840

## Description

This invention relates to support stands for power plant systems and in particular to support stands for internal combustion engine driven electrical power generators. The invention finds particular usefulness in the field of hiring, renting and leasing of such power plant systems.

Power plant systems or generators may be provided within a rigid housing, usually with sockets provided on the outside thereof for power supply connection. There ' is a need to place such power plant systems in locations where there is a risk of accidental damage to the housing due to collisions caused by other objects such as, for example, vehicles, lorries, fork lift trucks, cars, cranes and the like accidentally colliding with the power plant. There is also a need to be able to transport such power plant systems to and from hire sites and distribution or sales centres.

JP 10196392 shows an engine generator with an exhaust cover projecting from the housing to enhance silencing. US 3815965 discloses a housing for an air compressor with tool box compartments at the sides and ends to dissipate sound.

An object of the present invention is to provide a support stand which provides protection for the power plant system when the plant is in or being moved to an operable position, and which can be easily repaired in the event of accidental damage.

According to one aspect of the present invention there is provided a support stand for an electrical power generation plant having an enclosure, the stand comprising a stand base for supporting the plant enclosure, and a detachable pod mounted to the base and arranged to project beyond an edge of the enclosure to provide a structure for protecting the enclosure from damage due to collisions by other objects.

Thus, should the plant collide with another object, it will be protected by the pod. Should the pod become damaged, it can be removed and replaced. Furthermore, a stand may easily be adapted for the rental market by adding the pods.

The present invention will now be described, by way of example with reference to the accompanying drawings in which:-
Figure 1 is a side elevation of a support stand for a power plant having pods constructed in accordance with one embodiment of the present invention.
Figure 2 is a plan view of the stand shown in Figure 1;

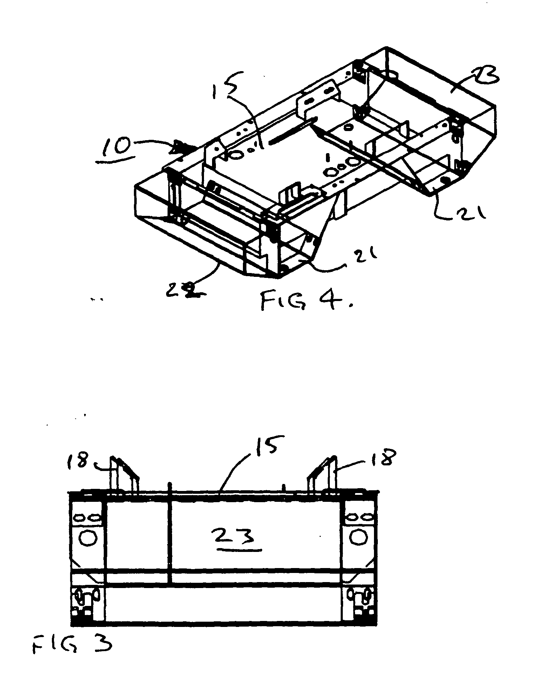

Figure 3 is an end view of the stand of Figure 1;
Figure 4 is a perspective view of the stand of Figure 1;

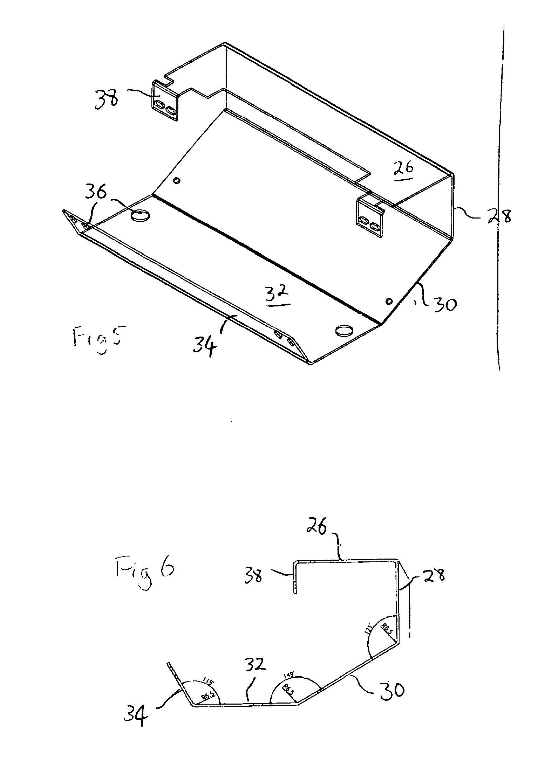

Figure 5 is a perspective view of a detachable pod of the stand of Figure 1;
Figure 6 is a side view of the pod of Figure 5; and
Figure 7 is a perspective view of a power generator plant enclosure mounted on the support stand of Figure 1.

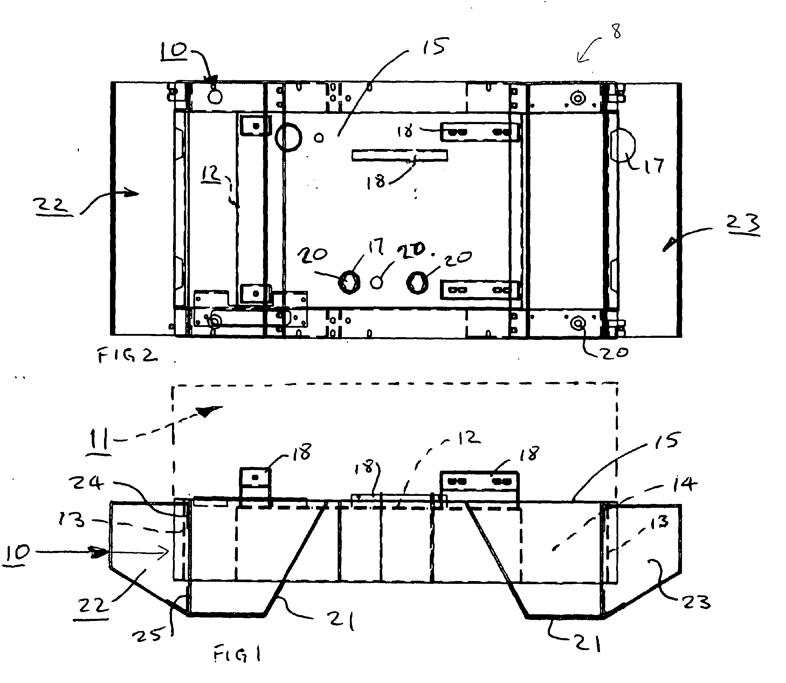

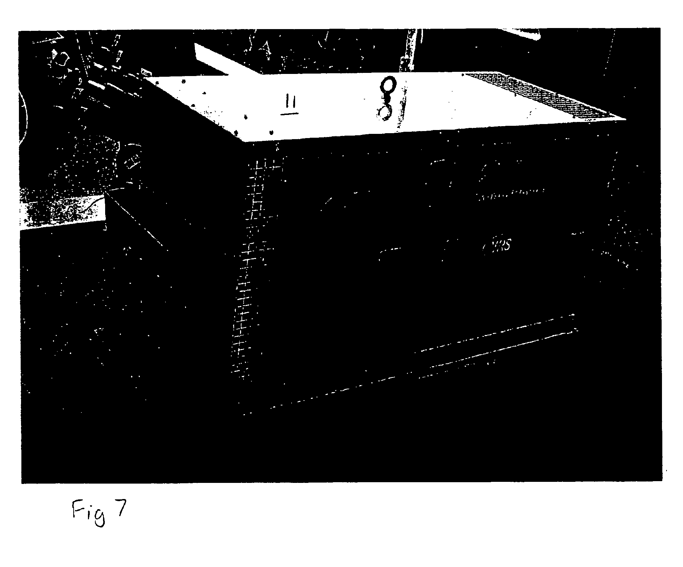

Referring to Figures 1 and 7 there is shown a stand 8, also known as a skid, for an internal combustion engine driven electrical power generator plant having an enclosure 11 (shown dotted in Figure 1). The stand has a base 10 incorporating a fuel tank 12 (shown dotted) and internal bulkheads 13 that define a bund 14 that has an internal volume to accommodate and contain within the bund 14 any leakages of fluids (eg. oil, water, fuel). The stand base 10 has a profile in plan ("foot-print") corresponding to the profile in plan of the power generator plant enclosure 11. The top plate 15 of the stand has openings 17, fixing brackets 18, cut outs (not shown) and pipe connections 20 to accommodate features on the underside of the generator plant. The stand base 10 includes two sheet metal fabricated feet 21 welded to the top plate 15 and side of the stand 10 adjacent each end edge of the tank 12.

The stand 10 incorporates two pods 22, 23 or skid ends constructed in accordance with the present invention. Each pod 22, 23 is made of a sheet metal fabricated hollow member that is releasably bolted at locations to the end edges of the stand base 10. For example, each pod 22, 23 comprises a sheet of material bent around parallel axes to form a top surface 26, an end surface 28, and a lower surface 30 together forming the projecting part of the pod 22, 23; and an underneath surface 32 and inside surface 34 together fitting around the foot 21, and having holes 36 for attaching to the foot 21. The pod 22, 23 also has a pair of apertured flanges 38 extending downwardly from the top surface 26 for attachment to the edge of the base 10.

The pods 22, 23 have a profile when viewed from the side, that projects beyond the ends of the stand base 10 to provide a crumple zone or protection zone. The pods 22, 23 are designed to prevent collisions by vehicles and other objects damaging the stand 10, the fuel tank 12, the bund 14 and the generator plant enclosure 11.

The pods 22, 23 also enables hot or dangerous items such as hot exhaust pipes (not shown) to be re-routed to discharge into the interior of one or more of the pods, and therefore protect persons from injuring themselves. Since the pods 22, 23 are open at their ends exhaust gases are free to vent from the pod or pods.

The pods are basically an 'easy to bolt-on' extra that enables the rental sector of the market to transport the power plant together with the stand base 10 assembled together from place to place to position the power plant at operational sites. Since the "foot-print" area in plan view of the power plant enclosure 11 and stand base 10 is smaller than would be the case with the pods 22, 23 in place, the power plant takes up less space during transporting the power plant from place to place.

A detachable cover 40 may also be supplied for attaching to the enclosure 11 adjacent the power plant sockets 42. The cover 40 projects beyond the sockets to protect them from damage.

This also enables distributors the flexibility of stocking "standard" power plants that do not have pods 22, 23 to meet non-rental situations and to stock conversion units of bolt-on pods 22, 23 to meet the needs of the rental market without the need to place special orders for purpose build stands. This has significant advantages in reducing the lead times to supply the rental market.

## Claims

1. A support stand (8) for an electrical power generation plant having an enclosure (11), the stand comprising a stand base (10) for supporting the plant enclosure, and a detachable pod (22, 23) mounted to the base and arranged to project beyond an edge of the enclosure to provide a structure for protecting the enclosure from damage due to collisions by other objects.

2. A stand according to claim 1 wherein the or each pod is fabricated from sheet material to define a hollow structure.

3. A stand according to claim 1 or claim 2 comprising a pair of pods provided at opposite edges of the stand.

4. A stand according to any one of the preceding claims wherein the stand comprises a fuel tank (12) within an outer structure made of a sheet material fabrication.

5. A stand according to claim 4 wherein the stand includes a bund (14) having an interior volume sufficient to contain fluid spillages.

6. A stand according to claim 3 wherein the stand includes a foot (21) adjacent each opposite edge of the stand.

7. A stand according to claim 6, in which the or each pod is attached to a foot of the stand.

8. A stand according to any one of any preceding claim wherein the structure is made by folding a sheet metal about two or more axes.

9. A stand according to any preceding claim, in which the or each pod extends substantially along the length of an edge of the stand.

10. An electrical power generation plant having a stand as claimed in any preceding claim.

11. An electrical power generation plant as claimed in claim 10, having an enclosure and at least one socket (42) projecting from the enclosure, and comprising a detachable socket (40) cover provided on the enclosure adjacent the socket(s) and projecting beyond the socket(s) for protecting the socket(s) from damage.

## Patentansprüche

1. Tragständer (8) für eine elektrische Energieerzeugungsanlage, die ein Gehäuse (11) aufweist, wobei der Ständer eine Ständerbasis (10) zum Tragen des Anlagegehäuses und eine abnehmbare Hülle (22, 23) umfasst, die an der Basis befestigt ist und dazu vorgesehen ist, über eine Kante des Gehäuses hinauszuragen, um eine Struktur zum Schutz des Gehäuses vor Beschädigungen infolge von Zusammenstoßen mit anderen Objekten zu bilden.

2. Ständer nach Anspruch 1, **dadurch gekennzeichnet, dass** die oder jede Hülle aus einem Blechmaterial hergestellt ist und eine hohle Struktur darstellt.

3. Ständer nach Anspruch 1 oder 2, umfassend ein Paar Hülsen, das an gegenüberliegenden Kanten des Ständers vorgesehen ist.

4. Ständer nach einem der vorhergehenden Ansprüche, **dadurch gekennzeichnet, dass** der Ständer einen Treibstofftank (12) innerhalb einer äußeren Struktur umfasst, die aus einem Blechmaterial besteht.

5. Ständer nach Anspruch 4, **dadurch gekennzeichnet, dass** der Ständer eine Tankumwallung (14) umfasst, die ein inneres Volumen hat, das ausreichend ist, um verschüttete Flüssigkeiten aufzunehmen.

6. Ständer nach Anspruch 3, **dadurch gekennzeichnet, dass** der Ständer an jeweils einer gegenüberliegenden Kante des Ständers angrenzend einen Fuß (21) umfasst.

7. Ständer nach Anspruch 6, **dadurch gekennzeichnet**, das die oder jede Hülle an einem Fuß des Ständers befestigt ist.

8. Ständer nach einem der vorhergehenden Ansprühe **dadurch gekennzeichnet, dass** die Struktur durch Faltung eines Blechmaterials um jeweils zwei oder mehr Linien hergestellt ist.

9. Ständer nach einem der vorhergehenden Ansprüche, **dadurch gekennzeichnet, dass** sich die oder jede Hülle im Wesentlichen entlang einer Kante des Ständers erstreckt.

10. Elektrische Energieerzeugungsanlage, die einen Ständer gemäß einem der vorhergehenden Ansprüche aufweist.

11. Elektrische Energieerzeugungsanlage gemäß Anspruch 10, die ein Gehäuse und wenigstens einen Sockel (42) aufweist, der von dem Gehäuse weg ragt, sowie eine abnehmbare Sockelabdeckung (40) umfasst, die auf dem Gehäuse angrenzend zu dem(n) Sockel(n) angeordnet ist und die über den/die Sockel hinausragt, um die/den Sockel vor einer Beschädigung zu schützen.

## Revendications

1. Socle de support (8) pour une installation de génération d'énergie électrique comportant une enceinte (11), le socle comprenant une base de socle (10) pour supporter l'enceinte d'installation, et une nacelle détachable (22, 23) montée sur la base et agencée pour se projeter au-delà d'un bord de l'enceinte pour fournir une structure pour protéger l'enceinte de dommages dus à des collisions avec d'autres objets.

2. Socle selon la revendication 1, dans lequel la ou chaque nacelle est fabriquée à partir d'un matériau en feuille pour définir une structure creuse.

3. Socle selon la revendication 1 ou la revendication 2, comprenant deux nacelles prévues au niveau de bords opposés du socle.

4. Socle selon l'une quelconque des revendications précédentes, dans lequel le socle comprend un réservoir de carburant (12) dans une structure extérieure fabriquée à partir d'un matériau en feuille.

5. Socle selon la revendication 4, dans lequel le socle comprend un bourrelet (14) ayant un volume intérieur suffisant pour contenir des déversements de fluide.

6. Socle selon la revendication 3, dans lequel le socle comprend un pied (21) adjacent à chaque bord opposé du socle.

7. Socle selon la revendication 6, dans lequel la ou chaque nacelle est fixée à un pied du socle.

8. Socle selon l'une quelconque des revendications précédentes, dans lequel la structure est réalisée en pliant une tôle autour de deux axes ou plus.

9. Socle selon l'une quelconque des revendications précédentes, dans lequel la ou chaque nacelle s'étend sensiblement le long de la longueur d'un bord du socle.

10. Installation de génération d'énergie électrique comportant un socle selon l'une quelconque des revendications précédentes.

11. Installation de génération d'énergie électrique selon la revendication 10, comportant une enceinte et au moins une prise (42) faisant saillie de l'enceinte, et comprenant un capot de prise détachable (40) prévu sur l'enceinte adjacent à la ou aux prises et se projetant au-delà de la ou des prises pour protéger la ou les prises d'un endommagement.
